# EUROPEAN PATENT APPLICATION

(11) **EP 1 028 545 A2**
(43) Date of publication of application: **16.08.2000**
(21) Application number: 00300941.2
(22) Date of filing: 07.02.2000
(51) Int. Cl.: H04B 7/185

(54) **Information distribution by radio via a repeater**

(30) Priority: 10.02.1999 JP 3208699
(71) Applicant: Sony Corporation, Tokyo 141-0001 (JP)
(72) Inventor: Fukuda, Kunio, Shinagawa-ku, Tokyo (JP)
(74) Representative: Nicholls, Michael John

(57) **Abstract**

To receive the information transmitted from a satellite in a moving hand-held information terminal. Connection is extended to the network operation center 1 as a provider from a hand-held information terminal via the PHS base station and ISDN and an access is made therefrom to the WWW server via the Internet. The information output from the WWW server is supplied to the network operation center from the Internet and is then transmitted to the media converting stations, from the parabola antenna via the satellite. The media converting stations transfer the information transmitted via the satellite 11 to the hand-held information terminals located in the control range of the self-apparatus.

## Description

The present invention relates to a hand-held type information processor, information processing method, repeater, repeating method, information distributing system, information distributing method and distribution medium and particularly to the aforesaid which can surely receive the information distributed from the predetermined information processor in a transportable hand-held type information processor.

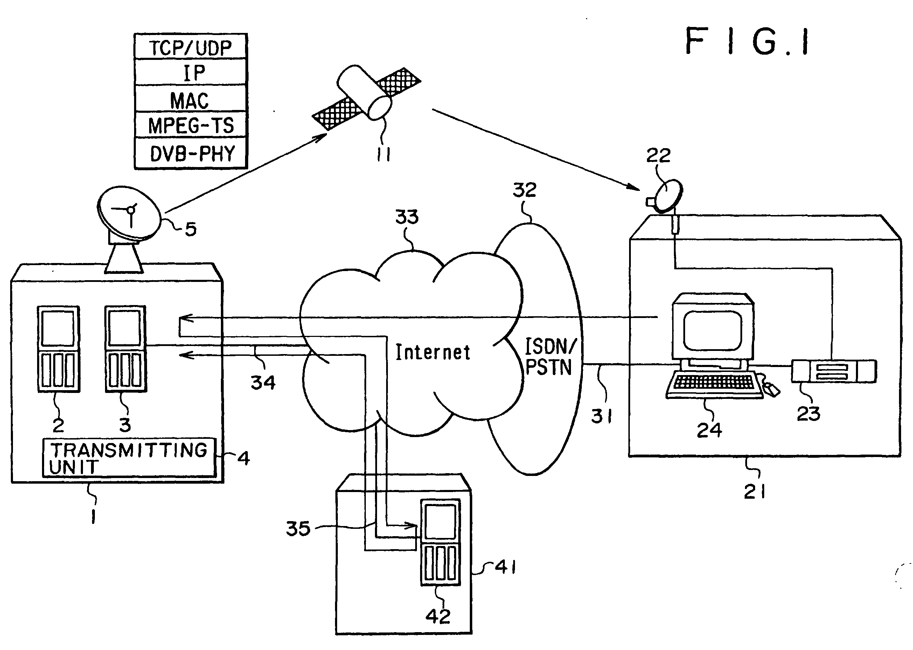

Fig. 1 illustrates a structural example of an information distributing system of the related art. A network operation center (NOC) 1 has a contents server 2 for distributing various contents and a gateway 3 which is connected to the Internet 33 via a leased line 34 to execute interface process. A transmitting unit 4 of the network operation center 1 transmits (broadcasts) the information (individual information) distributed from the Internet 33 via the leased line 34 or the information (common information) distributed from the contents server 2 through a parabola antenna 5. The parabola antenna 5 transmits the broadcast signal supplied from the transmitting unit 4 to a satellite 11.

The satellite 11 relays the broadcast signal transmitted from the parabola antenna 5 to a parabola antenna 22 installed at each house 21. The broadcast signal received by the parabola antenna 22 is then received by a set top box 23 prepared in each house 21 and is then supplied to a personal computer (PC) 24.

The personal computer is connected to the Internet 33 through ISDN (Integrated Services Digital Network)/PSTN (Public Switched Telephone Network) using the telephone line 31.

Moreover, the WWW server 42 of Web site 41 is also connected to the Internet 33 via the leased line 35.

When a user staying in the house 21 manipulates the personal computer 24 to request connection to the world wide web (WWW) server 42 of Web site 41 to the network operation center 1 as the provider, this request is input to the gateway 3 of the network operation center 1 via the telephone line 31, ISDN/PSTN 32, Internet 33 and leased line 44. Responding to this request, the gateway 3 makes access to the WWW server 42 of Web site 41 via the leased line 34, Internet 33 and leased line 35 to request distribution of information. The WWW server 42 distributes information to the gateway 2 via the leased line 35, Internet 33 and leased line 35 responding to this request. The gateway 3 outputs the input information to the transmitting unit 4. This transmitting unit 4 superimposes the input information (individual information) to the broadcast signal (common information) and then transmits the information to the satellite 11 from the parabola antenna 5.

The satellite 11 relays the broadcast signal transmitted from the parabola antenna 5 to the parabola antenna 22 provided at each house 21. The set top box 23 of each house 21 isolates and extract the signal including the information corresponding to self-apparatus (individual information) from the broadcast signal (common information) received through the parabola antenna 22 and then outputs the extracted signal to the personal computer 24.

As explained above, a user uses the telephone line on the ground as the ascending line and uses the satellite 11 of high speed line as the descending line in order to acquire the information distributed through the Internet 33.

In view of receiving the information distributed by such information distributing system by making use of a hand-held type information terminal which may be transported to the desired position, it is essential to provide a high gain antenna having high directivity at the hand-held information terminal and this antenna has to always be directed to the satellite 11. But, it is substantially difficult to provide such antenna to the hand-held information terminal. As a result, such information distributing system of the related art is accompanied at the portable hand-held information terminal by a problem that the distributing information cannot be received.

Considering the background explained above, the present invention has been proposed to surely receive the information distributed through the Internet with the hand-held information terminal.

According to an aspect of the present invention, the information processor comprises control means for controlling telephone communication by radio, first receiving means for receiving, from the repeater, the discriminating information for discriminating the repeater, acquiring means for acquiring the discriminating information to discriminate a self-apparatus, transmitting means for transmitting, to the first other information processor, the self-apparatus discriminating information acquired from the acquiring means and the repeater discriminating information received by the first receiving means, and second receiving means for receiving information from the second other information processor transmitted by radio from the repeater.

According to another aspect of the present invention, the information processing method comprises a control step for controlling telephone communication by radio from the repeater, a first receiving step for receiving, by radio, discriminating information for discriminating the repeater, an acquiring step for acquiring the discriminating information for discriminating self-apparatus, a transmitting step for transmitting the self-apparatus discriminating information acquired by the processing in the acquiring step and the repeater discriminating information received by the processing in the first receiving step to the first other information processor by making access thereto under the control by the processing of the control step, and a second receiving step for receiving information from the second other information processor transmitted from the repeater by radio.

According to another aspect of the present invention, the distribution medium distributes a computer readable program for causing a hand-held type information processor for receiving, by radio, information via a repeater located at the predetermined position by making access to the second other information processor from the first other information processor which are mutually connected with each other via a network to execute the processes including a control step for controlling telephone communication by radio, a first receiving step for receiving, from the repeater by radio, discriminating information for discriminating the repeater, an acquiring step for acquiring discriminating information for discriminating the self-apparatus, a transmitting step for transmitting the self-apparatus discriminating information acquired by the processing of the acquiring step and the repeater discriminating information received by the processing of the first receiving step to the first other information processor by making access thereto under the control by the processing of the control step, and a second receiving step for receiving information from the second other information processor transmitted by radio from the repeater.

According to another aspect of the present invention, the repeater comprises storing means for storing a discriminating information for discriminating a self-apparatus, first transmitting means for transmitting, to the first information processor in the self-control range, the discriminating information being stored in the storing means, receiving means for receiving information distributed by the third information processor, and second transmitting means for transmitting, to the first information processor by radio, information distributed from the third information processor and received by the receiving means.

According to another aspect of the present invention, the repeating method comprises a storing step for storing a discriminating information to discriminate a self-apparatus, a first transmitting step for transmitting the stored discriminating information, by radio, by the processing of the storing step to the first information processor in the self-control range, a receiving step for receiving information distributed by the third information processor, and a second transmitting step for transmitting, to the first information processor by radio, information, which is distributed from the third information processor, received by the processing of the receiving step.

According to another aspect of the present invention, the distribution medium distributes a computer readable program for causing a repeater located in the predetermined position, in which a hand-held type first information processor transmits, by radio, information distributed by a third information processor to the first information processor when a second information processor makes access to the third information processor which are mutually connected via a network, to execute the processes including a storing step for storing a discriminating information for discriminating a self-apparatus, a first transmitting step for transmitting, to the first information processor in the self-control range, the discriminating information being stored by the process of the storing step, a receiving step for receiving information distributed by the third information processor, and a second transmitting step for transmitting, to the first information processor by radio, information distributed from the third information processor and received by the receiving means.

According to another aspect of the present invention, the information processor comprises acquiring means for acquiring, when access is made from the first information processor, the discriminating information of the first information processor, the discriminating information of the repeater for controlling the range in which the first information processor is located and the discriminating information of the second information processor from the first information processor, storing means for storing in correspondence the discriminating information of the first information processor and the discriminating information of the repeater acquired by the acquiring means, first transmitting means for transmitting the discriminating information of the first information processor to the second information processor corresponding to the discriminating information acquired by the acquiring means, receiving means for receiving, via the network, the information distributed by the second information processor corresponding to transmission from the first transmitting means, and transmitting means for transmitting the information distributed by the second information processor and received by the receiving means to the repeater in such a manner that the information is superimposed on the broadcast signal.

According to another aspect of the present invention, the information processing method comprises an acquiring step for acquiring, when access is made from the first information processor, the discriminating information of the first information processor, the discriminating information of the repeater for controlling the range in which the first information processor is located and the discriminating information of the second information processor from the first information processor, a storing step for storing in correspondence the discriminating information of the first information processor and the discriminating information of the repeater acquired by said acquiring means, a first transmitting step for transmitting the discriminating information of the first information processor to the second information processor corresponding to the discriminating information acquired by the process of the acquiring step, a receiving step for receiving, via the network, the information distributed by the second information processor corresponding to transmission of the process of the first transmitting step, and a transmitting step for transmitting the information distributed by the second information processor and received by the process of the receiving step to the repeater in such a manner that the information is superimposed on the broadcast signal.

According to another aspect of the present invention, the distribution medium distributes a computer readable program for causing an information processor, for transmitting information distributed by a second information processor connected via a network to the first information processor via a repeater located at the predetermined position when access is made from the hand-held type first information processor, to execute the processes comprising an acquiring step for acquiring, when access is made from the first information processor, the discriminating information of the first information processor, the discriminating information of the repeater for controlling the range in which the first information processor is located and the discriminating information of the second information processor from the first information processor, a storing step for storing in correspondence the discriminating information of the first information processor and the discriminating information of the repeater acquired by the acquiring means, a first transmitting step for transmitting the discriminating information of the first information processor to the second information processor corresponding to the discriminating information acquired by the process of the acquiring step, a receiving step for receiving, via the network, the information distributed by the second information processor corresponding to transmission of the process of the first transmitting step, and a transmitting step for transmitting the information distributed by the second information processor and received by the process of the receiving step to the repeater in such a manner that the information is superimposed on the broadcast signal.

According to another aspect of the present invention, the information distributing system is characterized in that the first information processor comprises control means for controlling telephone communication by radio, first receiving means for receiving, from the repeater by radio communication system, the discriminating information for discriminating the repeater, first acquiring means for acquiring the discriminating information for discriminating the first information processor, first transmitting means for transmitting the discriminating information of the first information processor acquired by the first acquiring means and the discriminating information of the repeater received by the first receiving means to the second information processor accessed under the control of the control means, and second receiving means for receiving the information distributed by the third information processor and transmitted by radio from the repeater; the second information processor comprises second acquiring means for acquiring, from the first information processor when accessed therefrom, the discriminating information of the first information processor, the discriminating information of the repeater for controlling the location range of the first information processor and the discriminating information of the second information processor, first storing means for storing, in correspondence, the discriminating information of the first information processor and the discriminating information of the repeater which are acquired by the second acquiring means, second transmitting means for transmitting the discriminating information of the first information processor to the third information processor corresponding to the discriminating information acquired by the second acquiring means, third receiving means for receiving the information distributed by the information processor corresponding to transmission from the second transmitting means via the network, and transmitting means for transmitting the information distributed from the third information processor received by the third receiving means in such a manner that the information is superimposed on the broadcast signal; the third information processor comprises fourth receiving means for receiving the discriminating information of the first information processor from the second information processor, and output means for outputting, via said network, the information distributed to the first information processor corresponding to the discriminating information received by the fourth receiving information; and the repeater comprises second storing means for storing the discriminating information for discriminating the repeater, third transmitting means for transmitting, by radio, the discriminating information stored in the second storing means to the first information processor in the control range of the repeater, fifth receiving means for receiving the information distributed by the third information processor, and fourth transmitting means for transmitting, by radio, the information distributed by the third information processor and received by the fifth receiving means to the first information processor.

According to another aspect of the present invention, the information distributing method is characterized in that the information distributing method of first information processor comprises a control step for controlling telephone communication by radio, a first receiving step for receiving, by radio, the discriminating information for discriminating the repeater from the repeater, a first acquiring step for acquiring the discriminating information for discriminating the first information processor, a first transmitting step for transmitting, to the second information processor by access thereto under the control of the control step, the discriminating information of the first information processor acquired by the process of the first acquiring step and the discriminating information of the repeater by the process of the first receiving step, and a second receiving step for receiving the information distributed by the third information processor transmitted by radio from the repeater; the information distributing method of second information processor comprises a second acquiring step for acquiring, from the first information processor, the discriminating information of the first information processor, the discriminating information of the repeater for controlling the range in which the first information processor is located and the discriminating information of the second information processor when access is made from the first information processor, a first storing step for storing, in correspondence, the discriminating information of the first information processor and the discriminating information of the repeater acquired by the process of the second acquiring step, a second transmitting step for transmitting the discriminating information of the first information processor to the third information processor corresponding to the discriminating information acquired by the process of the second acquiring step, a third receiving step for receiving the information distributed from the third information processor via the network corresponding to transmission by the process of the second transmitting step, and a transmitting step for transmitting the information distributed from the third information processor and received by the process of the third receiving step in such a manner that the information is superimposed on the broadcast signal; the information distributing method of third information processor comprises a fourth receiving step for receiving the discriminating information of the first information processor from the second information processor, and an output step for outputting via the network the information distributed to the first information processor corresponding to the distributing information received by the process of the fourth receiving step; and the information distributing method of repeater comprises a second storing step for storing the discriminating information for discriminating the repeater, a third transmitting step for transmitting, by radio, the discriminating information stored by the process of the second storing step to the first information processor in the range controlled by the repeater, a fifth receiving step for receiving the information distributed by the third information processor, and a fourth transmitting step for transmitting, by radio, the information distributed from the third information processor and received by the process of the fifth receiving step to the first information processor.

According to another aspect of the present invention, the distribution medium described distributes a computer readable program for causing the first information processor of the information distributing system in which a hand-held type first information processor having the radio communication function distributes, by radio, the information distributed from a third information processor to the first information processor via the repeater located at the predetermined position when access is made to the third information processor from a second information processor which are mutually connected with each other via a network to execute the processes including a control step for controlling telephone communication by radio, a first receiving step for receiving, by radio from the repeater, the discriminating information for discriminating the repeater, a first acquiring step for acquiring the discriminating information for discriminating the first information processor, a first transmitting step for transmitting, to the second information processor accessed under the control of process of the control step, the discriminating information of the first information processor acquired from the first acquiring step and the discriminating information of the repeater received by the process of the first receiving step, and a second receiving step for receiving the information distributed from the third information processor and received by radio by the repeater; and/or the second information processor to execute the processes including a second acquiring step for acquiring, from the first information processor, the discriminating information of the first information processor, the discriminating information of the repeater for controlling the range in which the first information processor is located, and the discriminating information of the second information processor when access is made from the first information processor, a first storing step for storing corresponding discriminating information of the first information processor and the discriminating information of the repeater acquired by the process of the second acquiring step, a second transmitting step for transmitting the discriminating information of the first information processor to the third information processor corresponding to the discriminating information acquired by the process of the second acquiring step, a third receiving step for receiving, via the network, the information distributed from the third information processor corresponding to transmission by the process of the second transmitting step, and a transmitting step for transmitting, to the repeater, the information distributed from the third information processor and received by the process of the third receiving step in such a manner that the information is superimposed on the broadcast signal; and/or the third information processor to execute the processes including a fourth receiving step for receiving the discriminating information of the first information processor from the second information processor, and an output step for outputting, via the network, the information distributed to the first information processor corresponding to the discriminating information received by the process of the fourth receiving step; and the repeater to execute the processes including a second storing step for storing the discriminating information for discriminating the repeater, a third transmitting step for transmitting the discriminating information stored by the process of the second storing step to the first information processor in the range controlled by the repeater, a fifth receiving step for receiving the information distributed from the third information processor, and a fourth transmitting step for transmitting, by radio, the information distributed from the third information processor and received by the process of the fifth receiving step to the first information processor.

According to other aspects of the present invention, in the information processor, information processing method and distribution medium, the self-apparatus discriminating information and the repeater discriminating information are transmitted to the first other information processor.

According to other aspects of the present invention, in the repeater, repeating method and distribution medium, the stored discriminating information of self-apparatus is transmitted by radio to the first information processor in the range controlled by self-apparatus. Moreover, the information distributed from said third information processor is transmitted by radio to the first information processor.

According to other aspects of the present invention, in the information processor, information processing method and distribution medium, the discriminating information of the first information processor, the discriminating information of the repeater and the discriminating information of the second information processor can be acquired from the first information processor. The discriminating information of the first information processor is transmitted to the second information processor corresponding to the discriminating information acquired and when the information distributed from the information processor is received corresponding to such transmission, this information is transmitted to the repeater in such a manner that the information is superimposed on the broadcast signal.

According to other aspects of the present invention, in the information distributing system, information distributing method and distribution medium, the first information processor receives the discriminating information of the repeater and transmits this information to the second information processor together with the discriminating information of self-apparatus and the third discriminating information for the purpose of access. The second information processor transmits the discriminating information of the first information processor to the third information processor and also the information transmitted from the third information processor to the repeater. The repeater receives the information transmitted from the second information processor and then transmits this information to the first information processor.

The computer program may comprise computer program code means for performing the method steps and may be implemented independently in each separate apparatus.

Preferred Embodiments of the present invention will now be described in detail by way of non-limitative example with reference to the drawings wherein:
Fig. 1 illustrates a structure of the existing information distributing system;
Fig. 2 illustrates a structure of the information distributing system to which the present invention is applied;
Fig. 3 is a block diagram illustrating a structure of the transmitting unit 4 of Fig. 2;
Fig. 4 is a block diagram illustrating a structure of the media converting station 51 of Fig. 2;
Fig. 5 is a block diagram illustrating a structure of the hand-held information terminal 63 of Fig. 2;
Fig. 6 is a flowchart for explaining operation of the information distributing system of Fig. 2;
Figs. 7A to 7F explains capsulation of data;
Fig. 8 explains a structure of header of IP packet;
Figs. 9A to 9C explains a frame format of the media converting station 51 of Fig. 2;
Fig. 10 illustrates a structure of the other information distributing system to which the present invention is applied;
Fig. 11 is a block diagram for illustrating a structure of the hand-held information terminal 63 of Fig. 10;
Fig. 12 illustrates a structure of the other information distributing system to which the present invention is applied; and
Fig. 13 is a block diagram illustrating a structure of the media converting station 51 of Fig. 12.

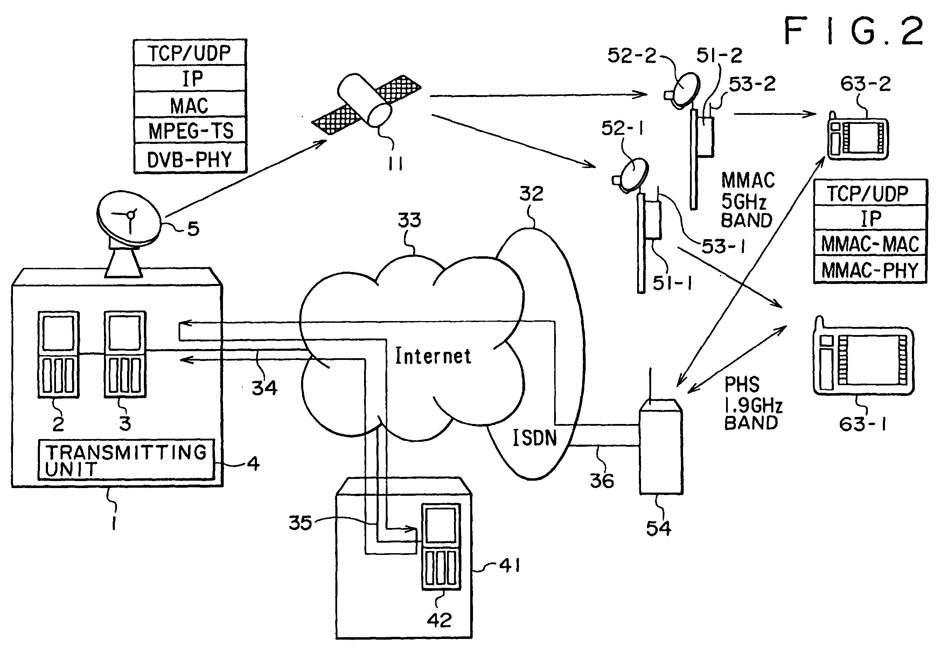

Fig. 2 illustrates an example of structure of the information distributing system to which the present invention is applied, and the elements corresponding to those of Fig. 1 are designated by the same reference numerals. In this structural example, a plurality of media converting stations 51-1, 51-2 are located with an interval, for example, of 200 meters. In Fig. 2, only a couple of media converting stations 51-1, 51-2 are illustrated but more media converting stations 51-i (i = 1, 2, 3, ..., n) are actually installed. The media converting stations 51-1, 51-2 are respectively provided with the parabola antennas 52-1, 52-2 for receiving the broadcast signal transmitted from the satellite 11 and are also provided with the antennas 53-1, 53-2 for transmitting the broadcast signal to the hand-held information terminals 63-1, 63-2.

The hand-held information terminals 63-1, 63-2 are held by users in order to receive the signal transmitted by the radio wave in the frequency band of 5GHz from the antennas 53-1, 53-2 of the media converting stations 51-1, 51-2, while users are moving. In Fig. 2, only a couple of hand-held terminals 63-1, 63-2 are illustrated but it is matter of course that more hand-held information terminals are actually installed.

The hand-held information terminals 63-1, 63-2 have the functions for making communication with a PHS (Personal Handy-phone System) base station 54 by utilizing the radio wave in the frequency band of 1.9 GHz. The PHS base station 54 is connected with ISDN 32 via the leased line 36.

As the protocol stack for transmission of signals to the parabola antenna 52 of the media converting station 51 (hereinafter, referred to only as media converting station 51 in the case where it is not required to individually discriminate the media converting stations 51-1, 51-2 and it is also applied to the other apparatus) via the satellite 11 from the parabola antenna 5, a physical layer (PHY) of DVB (Digital Video Broadcasting) exists on its foundation, the MPEG (Moving Picture Experts Group)-TS (Transport Stream) layer is provided thereon and moreover MAC (Media Access Control) layer such as DVB is also provided on such layer. On this MAC layer, the IP (Internet Protocol) packet including TCP (Transmission Control Protocol)/UDP (User Datagram Protocol) is further provided.

As the protocol layer of the radio wave to be transmitted to the hand-held information terminal 63 from the media converting station 51, the physical layer of MMAC (Multimedia Mobile Access Communication system) exists as the base. The MMAC-MAC layer is provided on this physical layer and the IP packet including TCP/UDP is further provided on the MMAC-MAC layer.

The other structure of the information distributing system of Fig. 2 is identical to that in the system of Fig. 1.

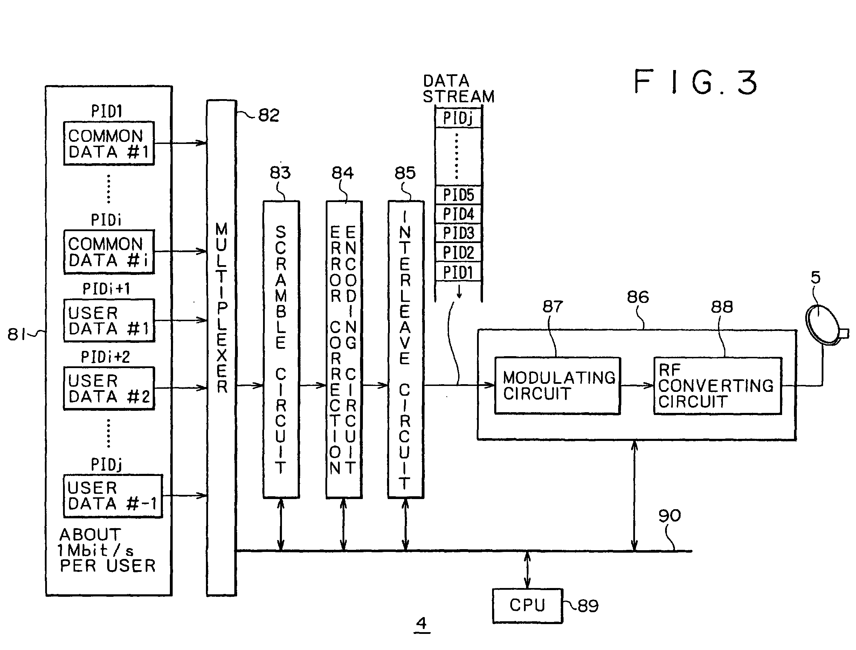

Fig. 3 illustrates an example of structure of the transmitting unit 4 in the network operation center 1. The supplying circuit 81 acquires common data #1 (PID(Packet ID) 1) to common data #i (PIDi) as the common information supplied from a contents server 2 and provides an output to a multiplexer 82. The supplying circuit 81 also acquires user data #1 (PIDi + 1) to user data #j-1 (PIDj) as the individual data transmitted from the leased line 34 via a gateway 3 and provides an output to the multiplexer 82. The multiplexer 82 respectively adds packet identifier (PID) to the packets of common data and user data supplied from the supplying circuit 81 to multiplex these inputs to the transport stream (Ts) of MPEG system.

A scramble circuit 83 scrambles the transport stream supplied from the multiplexer 82 conforming to the preset regulations under the control of CPU 89 to provide an output to an error correction encoding circuit 84. The error correction encoding circuit 84 adds an error correction code to the scrambled transport stream supplied from the scramble circuit 83 under the control of CPU 89 and provides an output to an interleave circuit 85. The interleave circuit 85 interleaves the data input from the error correction encoding circuit 84 under the control of CPU 89 and provides an output to an output circuit 86.

A modulating circuit 87 of the output circuit 86 executes the quadrature phase shift keying (QPSK) modulation to the MPEG data stream input from the interleave circuit 85 and then provides an output to an RF converting circuit 88. The RF converting circuit 88 converts frequency of the signal input from the modulating circuit 87 to the signal in the RF band and then provides an output the signal to the satellite 11 from the parabola antenna 5.

CPU 89 adequately controls the circuits from the multiplexer 82 to output circuit 86, as required, via the bus 90.

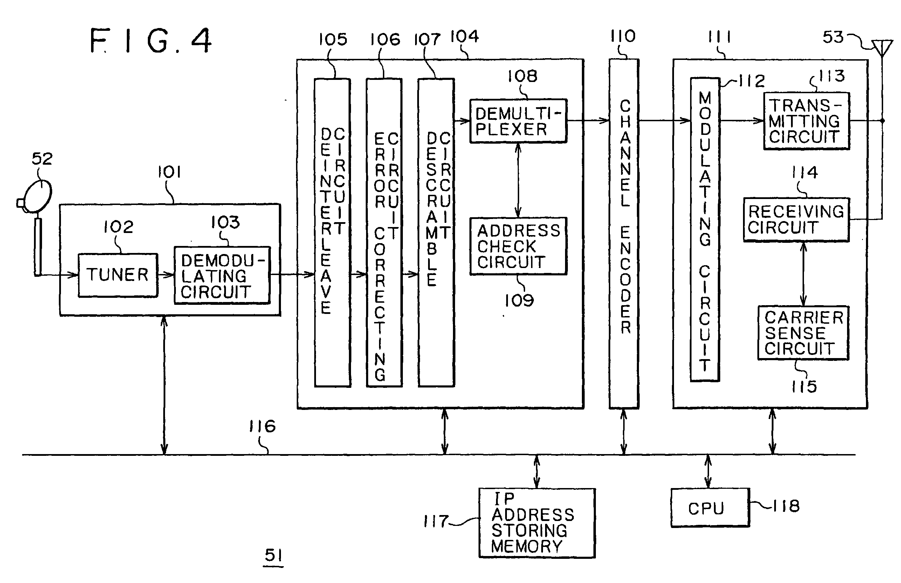

Fig. 4 illustrates an example of structure of the media converting station 51. A tuner 102 of a receiving unit 101 receives the signal transmitted from the satellite 11 via the parabola antenna 52, converts the RF signal of the predetermined channel to an intermediate frequency signal and then outputs this signal to a demodulating circuit 103. The demodulating circuit 103 executes the QPSK demodulation to the input signal corresponding to the QPSK modulation in the modulating circuit 87 of the transmitting unit 4 and outputs a baseband signal to a decoder 104.

An interleave circuit 105 of the decoder 104 executes de-interleave process to the signal input from the demodulating circuit 103 corresponding to the interleave in the interleave circuit 85 of the transmitting unit 4 and then provides an output to an error correcting circuit 106. The error correcting circuit 106 corrects an external code of the error correction code using the Read Solomon code and executes the process to decode the internal code with a Viterbi decoder. A descramble circuit 107 executes the descramble process corresponding to the scramble in the scramble circuit 83 of the transmitting unit 4, recovers the initial transport stream packet and provides an output to a demultiplexer 108.

The demultiplexer 108 demultiplexes the common data and user data for respective channels in the inverse process of the multiplexing process in the multiplexer 82 of the transmitting unit 4 and then provides an output to a channel encoder 110. An address check circuit 109 extracts the IP packet from the transport stream packet and compares a destination IP address existing in its header with the IP address of this media converting station 51 stored in an IP address storing memory 117. When both addresses are matched, such IP packet is output to the channel encoder 110 from the demultiplexer 108.

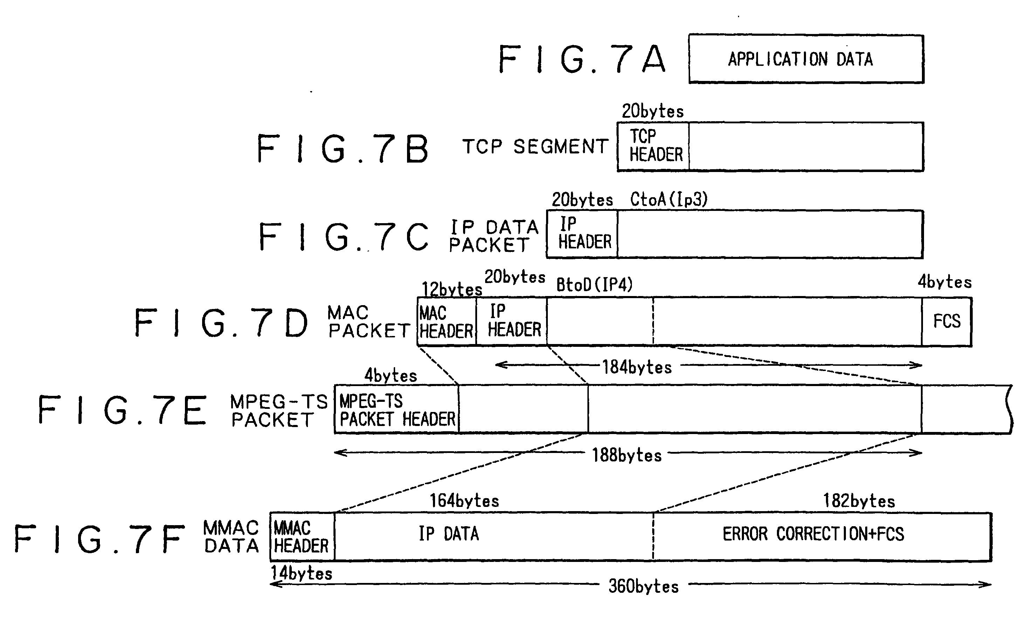

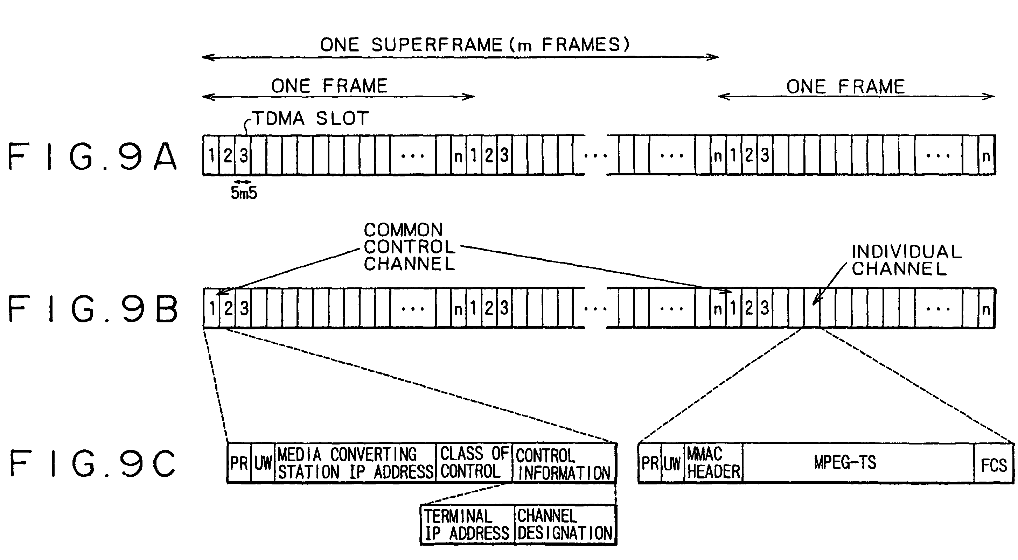

The channel encoder 110 encodes, as will be explained later with reference to Fig. 7, the IP packet into the MMAC data and also executes the data assembling process of the individual data which will be explained later with reference to Fig. 9. The channel encoder 110 also executes the data assembling process of the common control channel which is steadily transmitted which will be explained later with reference to Fig. 9. The MMAC data output from the channel encoder 110 is output to a MMAC transmitting unit 111.

A modulating circuit 112 of the MMAC transmitting unit 111 modulates the MMAC data supplied from the channel encoder 110 by the OFDM (Orthogonal Frequency Multiplexing) system and provides an output to a transmitting circuit 113. The transmitting circuit 113 converts the signal input from the modulating circuit 112 to the signal in the frequency band of 5GHz and then transmits to a hand-held information terminal 63 via an antenna 53.

The receiving circuit 114 receives a signal via the antenna 53 at the time of transmitting the individual channel signals and outputs this receiving signal to a carrier sense circuit 115. The carrier sense circuit 115 determines whether a channel carrier exists or not (whether carrier level is higher than the predetermined level or not) from an output of the receiving circuit 114.

CPU 18 controls the circuits from the receiving unit 101 to the IP address storing memory 117 via the bus 116.

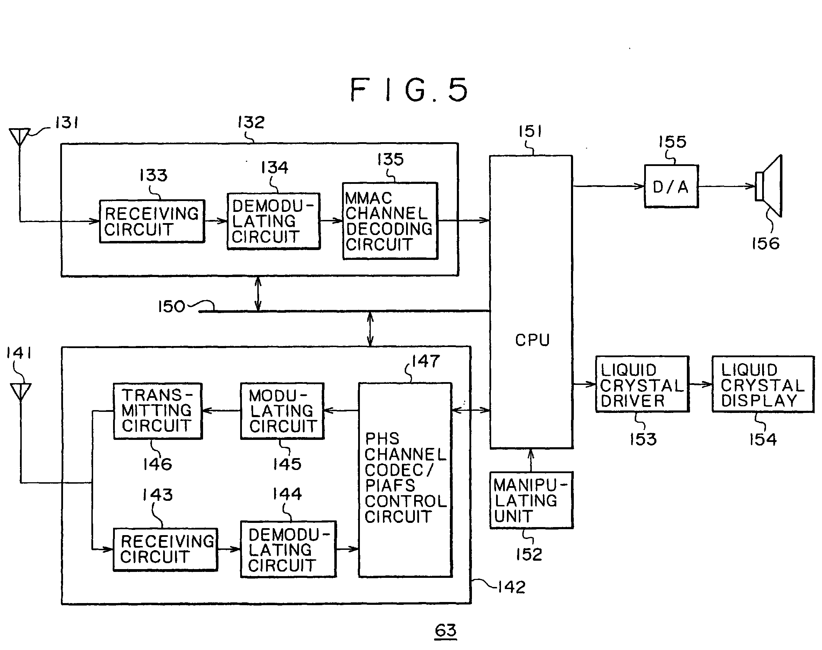

Fig. 5 illustrates an example of structure of the hand-held information terminal 63. An antenna 131 receives the radio wave from the media converting station 51 and provides an output to a receiving circuit 133 of a MMAC receiving unit 132. The receiving circuit 133 converts the input RF signal into an intermediate frequency signal and provides an output to a demodulating circuit 134. The demodulating circuit 134 demodulates the input signal by the OFDM system and provides an output to an MMAC channel decoding circuit 135. The MMAC channel decoding circuit 135 executes the process in the inverse sequence of the encoding process in the channel encoder 110 of the media converting station 51, extracts the IP packet from the radio format of the MMAC data and then provides an output to CPU 151.

The antenna 141 is used for communication with the PHS base station 54 and a receiving circuit 143 of the PHS unit 142 receives the signal input via the antenna 141, converts the RF signal into an intermediate frequency signal and then outputs to a demodulating circuit 144. The demodulating circuit 144 demodulates the input signal and outputs the signal to the PHS channel codec/PIAFS (PHS Internet Access Forum Standard) control circuit 147 (hereinafter, referred to only as PIAFS control circuit 147).

The PIAFS control circuit 147 is an error control circuit connected by the bearer connection (direct connection with a bare signal between terminals) with a PHS and realizes the error free radio transmission with an access point.

The modulating circuit 145 modulates the signal input from the PIAFS control circuit 147 and then outputs the signal to the transmitting circuit 146. This transmitting circuit 146 converts the signal input from the modulating circuit 145 to an RF signal and then outputs the RF signal to the PHS base station 54 from the antenna 141.

CPU 151 recovers an application data from the IP packet supplied from the MMAC channel decoding circuit 135. In this case, when a re-transmission request is issued by TCP, the PHS unit 142 is used to transmit the IP packet and then receives the retransmission data with the MMAC channel decoding circuit 135 via the media converting station 51 in order to realize an error control in the TCP level.

The HTML (Hyper Text Markup Language) data decoded by the MMAC channel decoding circuit 135 and application data such as video data are processed by CPU 151 and are displayed on a liquid crystal display 154 as the predetermined image. Moreover, a voice data is output from a speaker 156 via a D/A converter 155.

A manipulating unit 152 is manipulated by a user for inputting the predetermined commands to CPU 151.

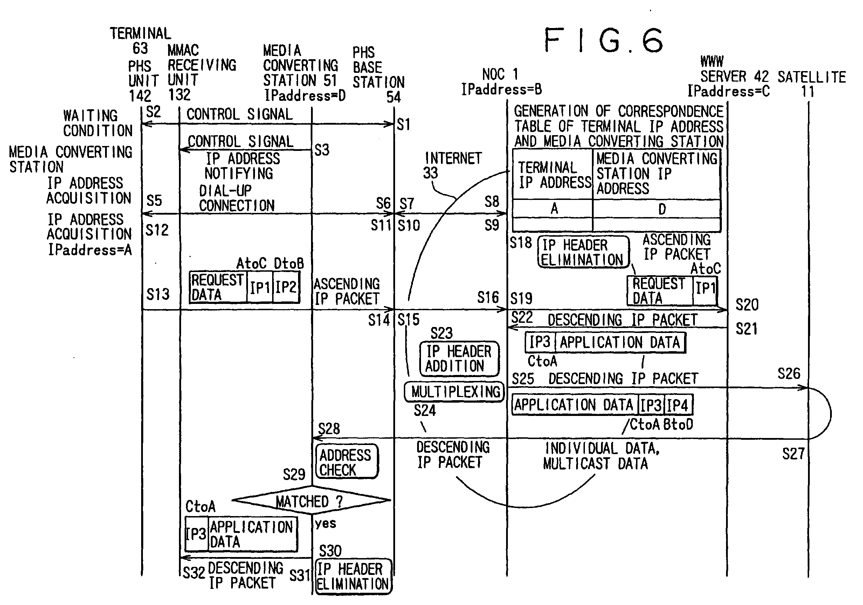

Next, the operations in such a case that an access is extended to the WWW server 42 from the hand-held information terminal 63 to receive distribution of the predetermined information will be explained with reference to Fig. 6. In the step S1, the PHS base station 54 outputs by radio a control signal to the hand-held information terminal 63 located within the control range. The receiving circuit 143 of the PHS unit 143 of the hand-held information terminal 63 receives, in the step S2, this control signal via the antenna 141, converts the RF signal to the intermediate frequency signal and then outputs the signal to the demodulating circuit 144. The demodulating circuit 144 demodulates the intermediate frequency signal input from the receiving circuit 143 and then outputs the demodulation result to the PIAFS control circuit 147. The PIAFS control circuit 147 receives the control signal from the PHS base station 54 and extracts the signal included therein to output to CPU 151. CPU 151 reads the ID (telephone number) of the hand-held information terminal 63 previously stored in a built-in memory and outputs to the modulating circuit 145 via the PIAFS control circuit 147. The modulating circuit 145 modulates the input ID and then outputs to the transmitting circuit 146. The transmitting circuit 146 converts the signal input from the modulating circuit 145 to the RF signal and then outputs this signal to the PHS base station 54 using the radio wave from the antenna 141.

Upon reception of ID from the hand-held information terminal 63, the PHS base station 54 transmits this ID to the predetermined management center together with the ID of PHS base station 54 from the leased line 36 via ISDN 32. Since such operation is carried out intermittently with a constant period, the management center detects in which management range of which PHS base station 54 each hand-held information terminal 63 is located. Therefore, on the occasion of calling the predetermined hand-held information terminal 63, a calling signal to the hand-held information terminal 63 is output from the PHS base station 54 in the area near the management range of the PHS base station 54 controlled by the management center.

In the step S3, the media converting station 51 transmits the control signal including the IP address (in this case, this IP address is defined as D) assigned to the self-apparatus to the hand-held information terminal 63 using the radio wave. Namely, CPU 118 reads own IP address previously stored in the IP address storing memory 117, then supplies this IP address to the channel encoder 110 for encoding to the MMAC data. The signal encoded by the channel encoder 110 is modulated by the modulating circuit 112 in the OFDM system and is then converted to the RF signal by the transmitting circuit 113. The RF signal output from the transmitting circuit 113 is then transmitted, from the antenna 53, to the hand-held information terminal 63 in the control range of the media converting station 51 using the radio wave.

The receiving circuit 133 of the MMAC receiving unit 132 of the hand-held information terminal 63 receives, in the step S4, this radio wave via the antenna 131, converts this radio wave to the intermediate frequency signal and then outputs the signal to the demodulating circuit 134. The demodulating circuit 134 demodulates the input signal by the OFDM system and outputs the signal to the MMAC channel decoding circuit 135. The MMAC channel decoding circuit 135 executes the decoding process in the inverse sequence of the encoding process in the channel encoder 110 and outputs the signal obtained by the decoding process to CPU 151. Upon reception of the IP address of the media converting station 51 for controlling the range in which the hand-held information terminal 63 is located, CPU 151 stores this IP address to the memory.

Since the processes in the steps S3 and S4 are conducted periodically, the hand-held information terminal 63 always stores, even during the moving, the IP address of the media converting station 51 for controlling the range in which the self-apparatus is located.

Next, in the step S5, a user of the hand-held information terminal 63 manipulates the manipulating unit 152 for executing the dial-up connection by PPP (Point-to-Point Protocol) to the network operation center 1 as the provider for the Internet 33. In more practical, a user can input the telephone number of the network operation center 1 by manipulating the manipulating unit 152.

When the telephone number of the network operation center 1 is input, CPU 151 of the hand-held information terminal 63 controls the PIAFS control circuit 147 to start the calling operation corresponding to this telephone number. When CPU 151 issues a command to start the calling operation, the PIAFS control circuit 147 outputs the signal for calling a destination party of the relevant telephone number to the modulating circuit 145. The modulating circuit 145 modulates the input signal and outputs the signal tot the transmitting circuit 146. The transmitting circuit 146 converts the input signal to the RF signal and then outputs the signal to the PHS base station 54 using the radio wave via the antenna 141.

Upon reception of the calling signal in the step S6, the PHS base station 54 outputs, in the step S7, the calling signal to the network operation center 1 from the leased line 36 via ISDN 32 and moreover the leased line 34. The gateway 3 of the network operation center 1, which has received this calling signal in the step S8, executes the process for closing the transmission line linked to the hand-held information terminal 63.

The gateway 3 of the network operation center 1 further reads, in the step S9, the IP address assigned to the hand-held information terminal 63 which has closed the telephone line (in this case, this IP address is defined as A) from the built-in memory and then transmits this IP address to the hand-held information terminal 63 which has closed the link. The signal including the IP address assigned to the hand-held information terminal 63 output from the gateway 3 is then output to the PHS base station 54 via the leased line 34, ISDN 32 and leased line 36. When the PHS base station 54 receives this signal in the step S10, this PHS base station 34 outputs, in the step S11, this signal to the hand-held information terminal 63 using the radio wave.

In the step S12, the hand-held information terminal 63 receives this radio wave. Namely, when the receiving circuit 143 receives this radio wave via the antenna 141, it outputs the intermediate frequency signal of the receiving signal to the demodulating circuit 144. The demodulating circuit 144 demodulates the signal input from the receiving circuit 143 and provides an output to the PIAFS control circuit 147. The PIAFS control circuit 147 extracts the signal included therein from the signal input from the demodulating circuit 144 and then outputs this signal to CPU 151. CPU 151 acquires the IP address (= A) assigned to the self-apparatus as explained above.

Next, a user inputs the IP address of the WWW server 42 for making access via the Internet 33 (in this case, this IP address is defined as C) by manipulating the manipulating unit 152. In this case, CPU 151 inserts the access request data to the data area of IP packet and also adds a couple of headers as the header. The IP address A of the hand-held information terminal 63 is set, as the transmission source IP address, to the internal header IP1 of a couple of headers and moreover the IP address C of the WWW server 42 to be connected is also set as the destination IP address. Moreover, to the external header IP2, the IP address D of the media converting station 51 acquired in the step S4 is set as the transmission source IP address and the IP address B of the network operation center 1 as the provider is also set as the destination IP address.

In the step S13, CPU 151 causes the PHS base station 54 to transmit this IP packet from the antenna 141 via the PIAFS control circuit 147, modulating circuit 145 and transmitting circuit 146.

Upon reception of the signal including this IP packet in the step S14, the PHS base station 54 relays this packet to transmit it, in the step S15, to the network operation center 1.

Upon reception of the signal including the IP packet from the PHS base station 54 in the step S16, the gateway 3 of the network operation center 1 verifies that the destination address included in the external header IP2 is the self-apparatus (IP address is B) and fetches this IP packet and also causes, in the step S17, the built-in table to store the transmission source IP address (D, in this case) of the header IP2 corresponding to the transmission source IP address (A, in this case) of the internal header IP1. Thereby, in this case, the IP address A of the hand-held information terminal 63 is stored in the table corresponding to the IP address D of the media converting station 51.

Next, in the step S18, the gateway 3 generates the IP packet in which the external header IP2 is eliminated, leaving only the internal header IP1 and then transmits this IP packet to the Internet 33 from the leased line 34 in the step S19. Since the WWW server 42 is designated as the destination IP address for this IP packet, this IP packet is transferred to the WWW server 42 from the Internet 33 via the leased line 35. In the step S20, the WWW server 42 receives this IP packet and reads the predetermined information from the hard disk corresponding to the access request included in this packet and then inserts this IP packet as the data of IP packet. Here, the transmission source IP address and destination IP address of the header IP1 of the IP packet transmitted from the network operation center 1 in the step S20 are respectively set to the header IP3 of such IP packet as the destination IP address and transmission source IP address. The WWW server 42 transmits the IP packet generated as explained above to the Internet 33 in the step S21.

Upon reception of the IP packet transmitted from the WWW server 42 via the Internet 33, the gateway 3 of the network operation center 1 verifies, in the step S22, the destination IP address of the header. When this destination IP address is the IP address of the hand-held information terminal 63 stored in the built-in table, the gateway 3 fetches this IP packet.

Capsulation of the data will be explained here with reference to Fig. 7. When the WWW server 42 extracts the application data (Fig. 7A) to be transmitted to the hand-held information terminal 63 in the step S21, a TCP header of 20 bytes is added to such application data to generate a TCP segment (Fig. 7B). The IP header of 20 bytes is further added to this TCP segment to generate the IP data packet (Fig. 7C). In this case, C is set as the transmission source IP address and A is also added as the destination IP address to this IP header (IP3).

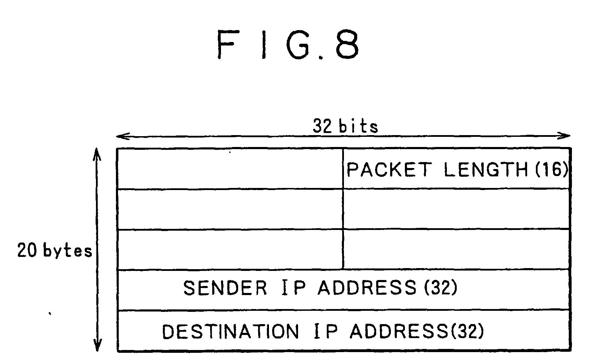

The header of IP packet is formed of the data of 20 bytes as illustrated in Fig. 8. In this data, the data indicating the packet length of 16 bits, data indicating the transmission source IP address of 32 bits and data indicating the destination address of 32 bits are included. Moreover, various pieces of control information are included in the header of this IP packet.

The gateway 3 of the network operation center 1 receives the IP data packet (Fig. 7C) transmitted from the WWW server 42 via the Internet 33 and then executes, in the step S23, the IP header adding process. Namely, the gateway 3 adds, moreover, the IP header (IP4) of 20 bytes to the IP data packet and sets thereto the IP address B of the self-apparatus as the transmission source IP address and the IP address (IP address D, in this case) (Fig. 7D) of the media converting station 54 stored in the table as the destination IP address corresponding to the address (IP address A) specified as the destination IP address to the header IP3. The gateway 3 further adds the MAC header of 12 bytes to this header IP4 and also adds the parity for RCS (Frame Check Sequence) error detection of four bytes for error detection to generate the MAC packet (Fig. 7D).

Moreover, the gateway 3 divides the MAC packet in unit of 184 bytes and adds the packet header of MPEG transport stream of four bytes to the header of 184 bytes to generate MPEG transport packet in unit of 188 bytes (Fig. 7E). This transport stream packet is then supplied to the transmitting unit 4.

The transmitting unit 4 executes, in the step S24, the process for multiplexing the transport stream packet supplied from the gateway 3 to the broadcasting data.

Namely, the supplying circuit 81 of the transmitting unit 4 fetches the transport stream packet supplied from the gateway 3 as one user data #k in the supplying circuit 81. To the supplying circuit 81, the broadcasting data of the contents server 2 is converted as the common data to the transport stream packet of the MPEG system and is then supplied. The multiplexer 82 multiplexes these common data and user data supplied from the supplying circuit 81.

The user data is processed at the bit rate of 1 M bit/s for a user.

The data multiplexed by the multiplexer 82 is then input to the scramble circuit 83 for the scrambling and thereafter an error correction code is added in the error correction encoding circuit 84. Data output from the error correction encoding circuit 84 is further interleaved in the interleave circuit 85, modulated by the QPSK modulation method in the modulating circuit 87 and is then converted to the RF signal in the radio frequency (RF) converting circuit 88. The RF signal output from the RF converting circuit 88 is transmitted to the satellite 11 in the step S25 via the parabola antenna 5. Therefore, in this case, C is set as the transmission source IP address to the internal header IP3 of one IP packet of the user data to be transmitted and A is also set thereto as the destination IP address. Moreover, to the external header IP4, B is set as the transmission source IP address and D is also set as the destination IP address.

When the satellite 11 receives, in the step S26, the radio wave transmitted from the network operation center 1, it relays to transmit the signal to the media converting station 51. Of course, this radio wave is also received, as in the case explained with reference to Fig. 1, by the set box 23 via the parabola antenna 22 of each house. In the set top box 23, only the common data (broadcast program data) is received and displayed on a television receiver or the like.

Meanwhile, the media converting station 51 receives, in the step S28, the radio wave transmitted from the satellite 11. Namely, the tuner 102 of the media converting station 51 receives the radio wave transmitted from the satellite 11 via the parabola antenna 52 and then outputs the intermediate frequency signal thereof to the demodulating circuit 103. The demodulating circuit 103 demodulates the intermediate frequency signal input from the tuner 102 by the QPSK demodulation method and then outputs the baseband signal to the decoder 104.

The deinterleave circuit 105 of the decoder 104 deinterleaves the signal input from the demodulating circuit 103 and outputs the signal to the error correcting circuit 106. The error correcting circuit 106 corrects error of the signal input from the deinterleave circuit 105 and then outputs the signal to the descramble circuit 107. The descramble circuit 107 descrambles the signal input from the error correcting circuit 106 and supplies the signal as the original transport stream packet data to the demultiplexer 108. The demultiplexer 108 individually demultiplexes a plurality of input common data and user data for each channel.

The address check circuit 109 extracts, in the step S29, the IP packet from the transport stream packet demultiplexed by the demultiplexer 108 and then compares the destination IP address described in the header of the IP packet with the IP address (IP address = D, in this case) of the self-apparatus stored in the IP address storing memory 117. When these IP addresses are matched, such IP packet is supplied to the channel encoder 110 from the demultiplexer 108. As explained above, the channel encoder 110 fetches only the IP packet to the hand-held information terminal 63 located in the area controlled by the self-apparatus.

In the step S30, the channel encoder 110 eliminates the unwanted header IP4 from the transport stream packet addressed to the self-apparatus fetched as explained above and generates the MMAC data (Fig. 7F) of 360 bytes in which the MMAC header of 14 bytes, error correction code of 182 bytes and FCS are added to the IP data of 164 bytes including the necessary header IP3.

The channel encoder 110 further executes the framing process of time division multiple access (TDMA). Namely, in TDMA, as illustrated in Fig. 9A, a super frame is formed of m (for example, m = 250) frames and each frame is formed of n (for example, n = 16) TDMA slots. One TDMA slot has, for example, the width of 5 ms.

As illustrated in Fig. 9B, the TDMA slot at the heading area of each frame is defined as the common control channel and the subsequent n-1 TDMA slots are defined as the individual channels.

The channel encoder 110 adds, to the MMAC data illustrated in Fig. 7F explained above, a unique word (UW) as the synchronous signal for dividing the TDMA slot and a preamble (PR) for clock synchronization to generate individual channel data as illustrated in Fig. 9C.

The channel encoder 110 also generates the common control data as illustrated in Fig. 9C. In the common control channel, the IP address of the media converting station 51 (IP address = D, in this case) is arranged following the preamble and unique word. Next to the IP address, a control class indicating the class of control information is located. The control class is the control information, for example, for instructing reception of the data to the hand-held information terminal 63 of such individual channel. In the control information, the IP address of the hand-held information terminal 63 and designated information of individual channel used by the hand-held information terminal 63 having such IP address (namely, information for designating any one channel among the n-1 individual channels) are arranged.

When data is transmitted, for example, to the hand-held information terminal 63-1 using individual channel indicated by the number 3 in Fig. 9B, the channel encoder 110 arranges the data to be transmitted to the hand-held information terminal 63-1 to individual channel of number 3 and the IP address of the hand-held information terminal 63-1 is set as the IP address corresponding to individual channel of number 3 as the control information of the common control channel. As the IP address of the medial converting station, the IP address of the self-apparatus is designated.

As explained above, the data generated by the channel encoder 110 is then input in the step S31 to the modulating circuit 112 and is then modulated by the OFDM system. Thereafter, the modulated signal is transmitted to the hand-held information terminal 63 via the antenna 53 as the RF signal from the transmitting circuit 113.

The hand-held information terminal 63 receives the radio wave transmitted from the media converting station 51 with the MMAC receiving circuit 132 via the antenna 131 in the step S32 and outputs the reception result to CPU 151. CPU 151 outputs the video data among the received data to the liquid crystal display 154 via the liquid crystal driver 153 for displaying this received signal. Moreover, the audio data is output from a speaker 156 via the D/A converter 155.

CPU 118 of the media converting station 51 determines, at the time of transmitting the information to the hand-held information terminal 63-1 using, for example, the individual channel of number 3, whether the TDMA signal is transmitted or not in the timing of the No. 3 individual channel. Namely, in this case, the receiving circuit 114 receives radio wave via the antenna 53 and outputs the reception result to the carrier sense circuit 115 determines whether the TDMA signal is transmitted or not from the output of receiving circuit 114 in the timing of the No. 3 individual channel and outputs the determination result to CPU 118. CPU 118 causes the hand-held information terminal 63-1 to transmit data using such individual channel when it is proved that there is no carrier in the timing of No. 3 individual channel. Here, when such individual channel is already used by the other media converting station 51, it is also determined whether the other individual channels are vacant or not in order to retrieve the individual vacant channels.

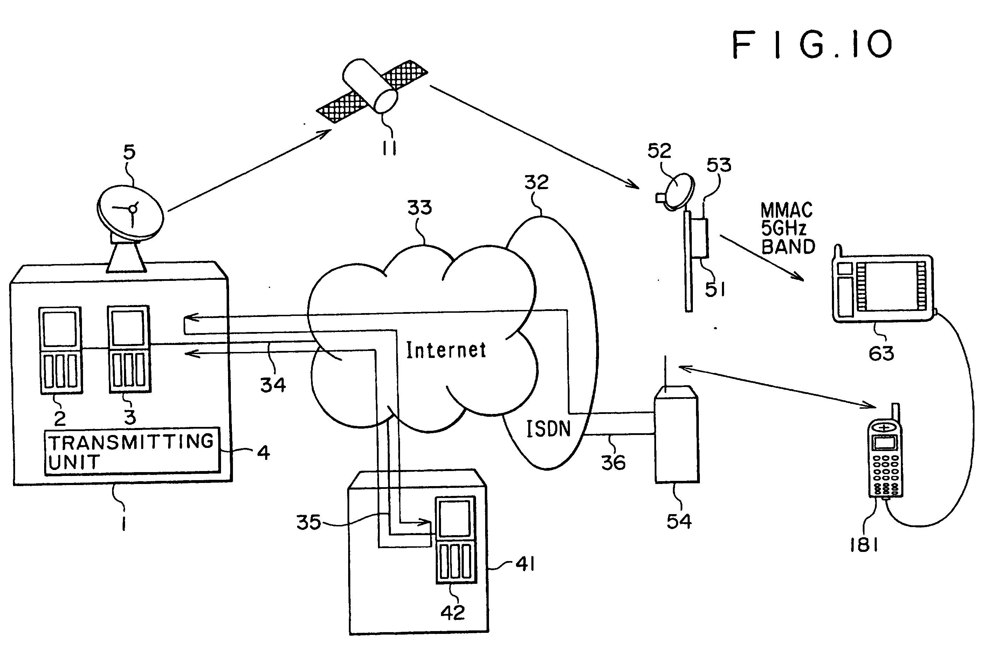

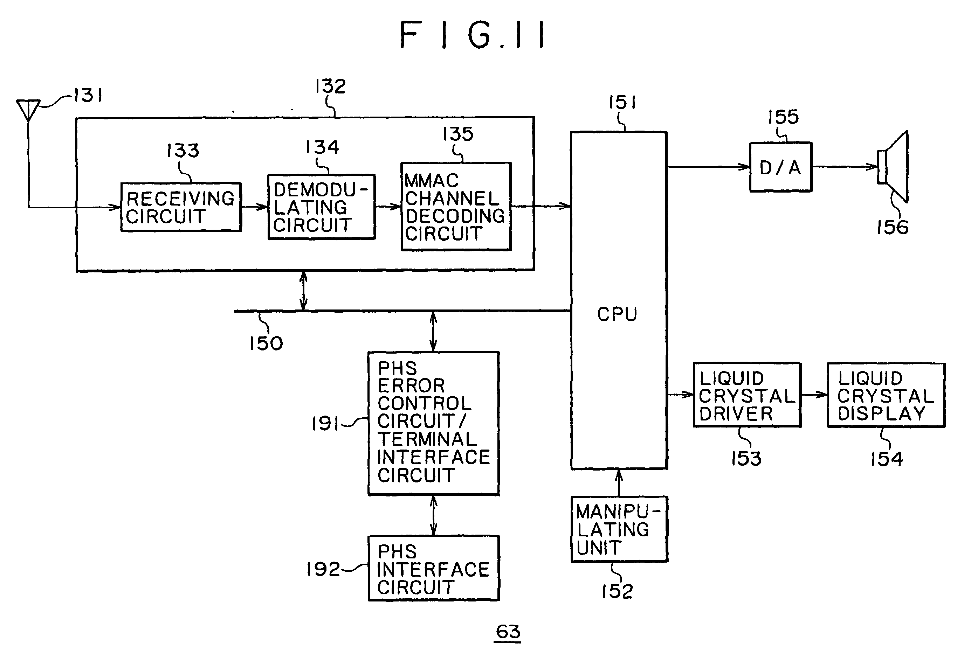

In above operation, not only the MMAC unit 132 but also PHS unit 142 are provided in the hand-held information terminal 63, but it is also possible that the PHS unit 142 is eliminated and this unit may be replaced with a PHS telephone set 181 as illustrated in Fig. 10. In this case, the hand-held information terminal 63 is structured as illustrated in Fig. 11.

Namely, in this structural example, the PHS unit 142 and antenna 141 of Fig. 8 are eliminated and a PHS error control circuit/terminal interface circuit 191 and a PHS interface circuit 192 are provided. The PHS interface circuit 192 is connected with the PHS telephone set 181 with a cord. In this case, the functions of the PHS unit 142 and antenna 141 of Fig. 5 are realized, in this case, by the PHS telephone set 181. The PHS error control circuit/terminal interface circuit 191 executes the interface process between CPU 151 and PHS telephone set 181. The other structure in Fig. 11 is identical to that of Fig. 5.

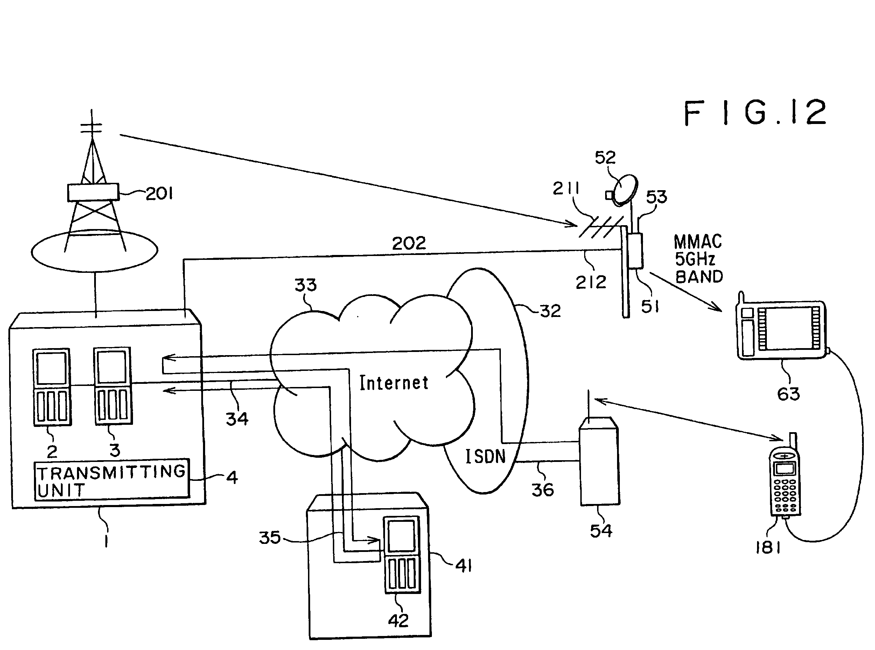

In above operation, data is transmitted to the hand-held information terminal 63 via the satellite 11 but, for example, as illustrated in Fig. 12, data can also be transmitted to the media converting station 51 via the ground wave antenna 201 or CATV coaxial cable 202. In this case, the media converting station 51 is also provided with an antenna 211 for receiving the radio wave of the ground wave antenna 201 and a CATV coaxial cable 212 connected to the CATV coaxial cable 202 of the network operation center 1. Moreover, the parabola antenna 52 is also necessary to receive the radio wave transmitted from the satellite 11.

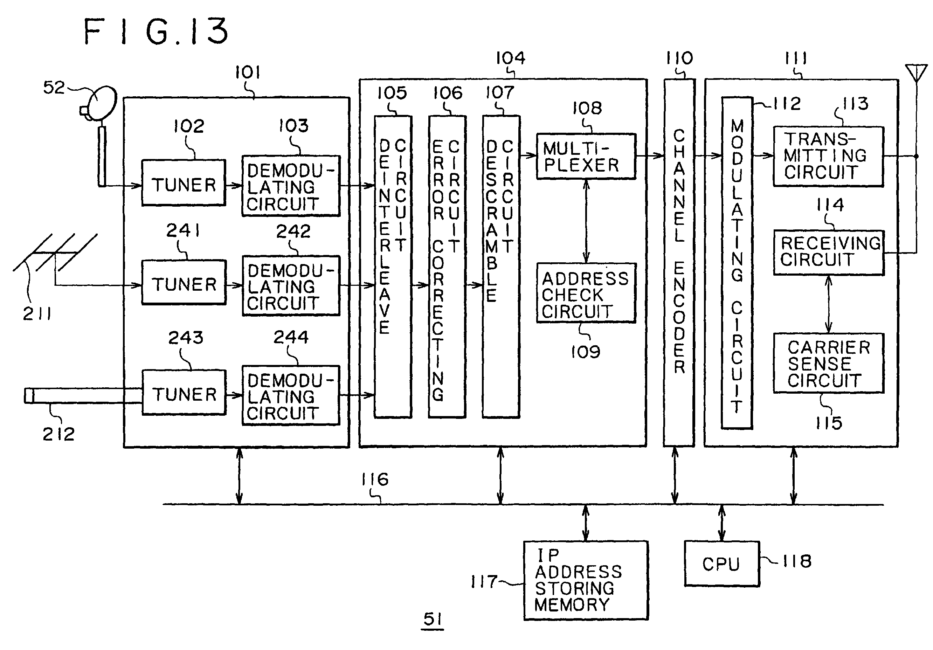

Fig. 13 illustrates an internal structural example of the media converting station 51 of Fig. 12. In this structural example, the receiving unit 101 is provided, in addition to the tuner 102 and demodulating circuit 103 for processing the radio wave received by the parabola antenna 52, with a tuner 241 and a demodulating circuit 242 for processing the signal received by the ground wave antenna 211 and a tuner 243 and a demodulating circuit 244 for processing the signal received by the CATV coaxial cable 212. The other structure is identical to that of Fig. 4.

In the structure of Fig. 13, the media converting station 51 is capable of receiving any broadcast signal transmitted via the satellite 11, ground wave antenna 201 or CATV coaxial cable 202.

In above example, the function of PHS or the PHS telephone set 181 itself is used but it is also possible to introduce the function of a hand-held telephone set or the hand-held telephone set itself. In this case, a cellular base station is used in place of the PHS base station 54 and the cellular base station is connected to ISDN 32 via the cellular network.

In this specification, the system represents the apparatus as a whole formed of a plurality of devices.

Moreover, as a distribution medium for distributing a computer program to execute above processes to users, communication medium such as network and satellite may be used as well as the recording medium such as magnetic disk, CD-ROM and solid state memory or the like.

### [Effect of the Invention]

As explained above, according to the information processor described in claim 1, information processing method described in claim 5 and distribution medium described in claim 6, since the self-apparatus discriminating information and the repeater discriminating information can be transmitted to the first other information processor, the information transmitted from the second other information processor can surely be received via the repeater while the apparatus is moving.

According to the repeater described in claim 7, repeating method described in claim 9 and distributing medium described in claim 10, since the stored discriminating information can be transmitted by radio to the first information processor in the control range of self-apparatus and the information distributed by the third information processor is also transmitted by radio to the first information processor, the information distributed by the third information processor can surely be relayed to the moving first information processor.

According to the information processor described in claim 11, information processing method described in claim 14 and distributing medium described in claim 15, since the discriminating information of the first information processor, discriminating information of the repeater and discriminating information of the second information processor are acquired from the first information processor, it is possible to surely distribute the information distributed from the second information processor to the moving first information processor.

According to the information distributing system described in claim 16, information distributing method described in claim 17 and distributing medium described in claim 18, since the discriminating information of the first information processor and the discriminating information of the repeater are transmitted to the second information processor from the first information processor and the information distributed from the third information processor is transmitted to the first information processor via the repeater from the second information processor, it is possible to realize the system which can surely distribute the information distributed from the third information processor to the moving first information processor.

## Claims

1. An information processor for receiving, by radio, information via a repeater located at the predetermined position by making access to the second other information processor from a first other information processor which are mutually connected with each other via a network, comprising:
control means for controlling telephone communication by radio;
first receiving means for receiving, from said repeater, the discriminating information for discriminating said repeater;
acquiring means for acquiring the discriminating information to discriminate a self-apparatus;
transmitting means for transmitting, to said first other information processor, said self-apparatus discriminating information acquired from said acquiring means and said repeater discriminating information received by said first receiving means; and
second receiving means for receiving information from said second other information processor transmitted by radio from said repeater.

2. An information processor as claimed in claim 1, wherein said acquiring means acquires said self-apparatus discriminating information from said first information processor by making access thereto under the control of said control means.

3. An information processor as claimed in claim 1 or 2, wherein said control means includes a hand-held telephone set for making communication by radio.

4. An information processor as claimed in any one of the preceding claims, wherein said repeater receives information from said second other information processor superimposed on the broadcast signal.

5. An information processing method for a hand-held type information processor for receiving, by radio, information via a repeater located at the predetermined position by making access to the second other information processor from the first other information processor which are mutually connected with each other via a network, comprising:
control step for controlling telephone communication by radio;
first receiving step for receiving, by radio from said repeater, discriminating information for discriminating said repeater;
acquiring step for acquiring the discriminating information for discriminating self-apparatus;
transmitting step for transmitting said self-apparatus discriminating information acquired by the processing in said acquiring step and said repeater discriminating information received by the processing in said first receiving step to said first other information processor by making access thereto under the control by the processing of said control step; and
second receiving step for receiving information from said second other information processor transmitted from said repeater by radio.

6. A repeater located at the predetermined position in which a hand-held type first information processor transmits, by radio, information distributed by a third information processor when a second information processor makes access to said third information processor which are mutually connected with each other via a network, comprising:
storing means for storing a discriminating information for discriminating a self-apparatus;
first transmitting means for transmitting, to said first information processor in the self-control range, said discriminating information being stored in said storing means;
receiving means for receiving information distributed by said third information processor; and
second transmitting means for transmitting, to said first information processor by radio, information distributed from said third information processor and received by said receiving means.

7. A repeater as claimed in claim 6, wherein said receiving means receives information superimposed on the broadcast signal distributed from said third information processor.

8. A repeating method for a repeater located at the predetermined position, in which a hand-held type first information processor transmits, by radio, information distributed by a third information processor to said first information processor when access is made to said third information processor from a second information processor which are mutually connected with each other via a network, comprising:
storing step for storing a discriminating information to discriminate a self-apparatus;
first transmitting step for transmitting said stored discriminating information, by radio, by the processing of said storing step to said first information processor in the self-control range;
receiving step for receiving information distributed by said third information processor; and
second transmitting step for transmitting, to said first information processor by radio, information, which is distributed from said third information processor, received by the processing of said receiving step.

9. An information processor for transmitting, when access is made from a hand-held type first information processor, information distributed from a second information processor connected via a network to said first information processor via a repeater located at the predetermined position, comprising:
acquiring means for acquiring, when access is made from said first information processor, the discriminating information of said first information processor, the discriminating information of said repeater for controlling the range in which said first information processor is located and the discriminating information of said second information processor from said first information processor;
storing means for storing in correspondence the discriminating information of said first information processor and the discriminating information of said repeater acquired by said acquiring means;
first transmitting means for transmitting the discriminating information of said first information processor to said second information processor corresponding to said discriminating information acquired by said acquiring means;
receiving means for receiving, via said network, the information distributed by said second information processor corresponding to transmission from said first transmitting means; and
transmitting means for transmitting the information distributed by said second information processor and received by said receiving means to said repeater in such a manner that said information is superimposed on the broadcast signal.

10. An information processor as claimed in claim 9, further comprising a second transmitting means for transmitting, to said first information processor, the discriminating information of said first information processor.

11. An information processor as claimed in claim 9 or 10, wherein said transmitting means transmits said broadcast signal via a satellite wave, ground wave or a cable.

12. An information processing method for an information processor for transmitting the information distributed from a second information processor connected via a network to a first information processor via a repeater located at the predetermined position when access is made from a hand-held type first information processor, comprising:
acquiring step for acquiring, when access is made from said first information processor, the discriminating information of said first information processor, the discriminating information of said repeater for controlling the range in which said first information processor is located and the discriminating information of said second information processor from said first information processor;
storing step for storing in correspondence the discriminating information of said first information processor and the discriminating information of said repeater acquired by said acquiring means;
first transmitting step for transmitting the discriminating information of said first information processor to said second information processor corresponding to said discriminating information acquired by the process of said acquiring step;
receiving step for receiving, via said network, the information distributed by said second information processor corresponding to transmission of the process of said first transmitting step; and
transmitting step for transmitting the information distributed by said second information processor and received by the process of said receiving step to said repeater in such a manner that said information is superimposed on the broadcast signal.

13. An information distribution system in which a hand-held type information processor including the radio communication function distributes the information distributed by a third information processor to said first information processor by radio via a repeater located at the predetermined position when access is made to said third information processor from a second information processor which are mutually connected with each other via a network, wherein:
said first information processor is comprising:
control means for controlling telephone communication by radio;
first receiving means for receiving, from said repeater by radio communication system, the discriminating information for discriminating said repeater;
first acquiring means for acquiring the discriminating information for discriminating said first information processor;
first transmitting means for transmitting the discriminating information of said first information processor acquired by said first acquiring means and the discriminating information of said repeater received by said first receiving means to said second information processor accessed under the control of said control means; and
second receiving means for receiving the information distributed by said third information processor and transmitted by radio from said repeater;
said second information processor is comprising:
second acquiring means for acquiring, from said first information processor when accessed therefrom, the discriminating information of said first information processor, the discriminating information of said repeater for controlling the location range of said first information processor and the discriminating information of said second information processor;
first storing mans for storing, in correspondence, the discriminating information of said first information processor and the discriminating information of said repeater which are acquired by said second acquiring means;
second transmitting means for transmitting the discriminating information of said first information processor to said third information processor corresponding to said discriminating information acquired by said second acquiring means;
third receiving means for receiving the information distributed by said information processor corresponding to transmission from said second transmitting means via said network; and
transmitting means for transmitting the information distributed from said third information processor received by said third receiving means in such a manner that said information is superimposed on the broadcast signal;
said third information processor is comprising:
fourth receiving means for receiving said discriminating information of said first information processor from said second information processor; and
output means for outputting, via said network, the information distributed to said first information processor corresponding to said discriminating information received by said fourth receiving information; and
said repeater is comprising:
second storing means for storing the discriminating information for discriminating said repeater;
third transmitting means for transmitting, by radio, said discriminating information stored in said second storing means to said first information processor in the control range of said repeater;
fifth receiving means for receiving the information distributed by said third information processor; and
fourth transmitting means for transmitting, by radio, the information distributed by said third information processor and received by said fifth receiving means to said first information processor.

14. An information distribution method for an information distribution system in which a hand-held type first information processor distributes, to said first information processor by radio, the information distributed by a third information processor via the repeater located at the predetermined position when access is made to said third information processor from a second information processor which are mutually connected with each other via a network, wherein:
said information distributing method of first information processor comprises:
control step for controlling telephone communication by radio;
first receiving step for receiving, by radio, the discriminating information for discriminating said repeater from said repeater;
first acquiring step for acquiring the discriminating information for discriminating said first information processor;
first transmitting step for transmitting, to said second information processor by access thereto under the control of said control step, the discriminating information of said first information processor acquired by the process of said first acquiring step and the discriminating information of said repeater by the process of said first receiving step; and
second receiving step for receiving the information distributed by said third information processor transmitted by radio from said repeater;
said information distributing method of second information processor comprises:
second acquiring step for acquiring, from said first information processor, the discriminating information of said first information processor, the discriminating information of said repeater for controlling the range in which said first information processor is located and the discriminating information of said second information processor when access is made from said first information processor;
first storing step for storing, in correspondence, the discriminating information of said first information processor and the discriminating information of said repeater acquired by the process of said second acquiring step;
second transmitting step for transmitting the discriminating information of said first information processor to said third information processor corresponding to said discriminating information acquired by the process of said second acquiring step;
third receiving step for receiving the information distributed from said third information processor via said network corresponding to transmission by the process of said second transmitting step; and
transmitting step for transmitting the information distributed from said third information processor and received by the process of said third receiving step in such a manner that said information is superimposed on the broadcast signal;
said information distributing method of third information processor comprises:
fourth receiving step for receiving said discriminating information of said first information processor from said second information processor; and
output step for outputting via said network the information distributed to said first information processor corresponding to said distributing information received by the process of said fourth receiving step; and
said information distributing method of repeater comprises:
second storing step for storing the discriminating information for discriminating said repeater;
third transmitting step for transmitting, by radio, said discriminating information stored by the process of said second storing step to said first information processor in the range controlled by said repeater;
fifth receiving step for receiving the information distributed by said third information processor; and
fourth transmitting step for transmitting, by radio, the information distributed from said third information processor and received by the process of said fifth receiving step to said first information processor.

15. A computer program arranged to cause an information processor, repeater or information distribution system to perform a method as claimed in any one of claims 5, 8, 12 or 14 when the program is executed on the information processor, repeater or information distribution system.

16. A computer program distribution medium distributing a computer program arranged to cause an information processor, repeater or information distribution system to perform a method as claimed in any one of claims 5, 8, 12 or 14 when the program is executed on the information processor, repeater or information distribution system.
